# EUROPÄISCHE PATENTSCHRIFT

(11) **EP 1 000 953 B1**
(45) Veröffentlichungstag und Bekanntmachung des Hinweises auf die Patenterteilung: **20.09.2006**
(21) Anmeldenummer: 99122286.0
(22) Anmeldetag: 09.11.1999
(51) Int. Cl.: C08B 37/08, C08L 5/08

(54) **Verfahren zur Herstellung eines thermoplastisch verarbeitbaren Compound-Werkstoffes aus Chitin**
Process for producing a thermoplastically processable material from chitin
Procédé de production d'un matériau à base de chitine et pouvant être mis en oeuvre de façon thermoplastique

(30) Priorität: 11.11.1998 DE 19852027
(43) Veröffentlichungstag der Anmeldung: 17.05.2000
(73) Patentinhaber: Fraunhofer-Gesellschaft zur Förderung der angewandten Forschung e.V., 80686 München (DE)
(72) Erfinder: Nägele, Helmut, 76327 Pfinztal (DE); Pfitzer, Jürgen, 76327 Pfinztal (DE); Eyerer, Peter, Prof., Dr.-Ing., 76228 Karlsruhe (DE); Eisenreich, Norbert, Dr., 76327 Pfinztal (DE); Elsner, Peter, Dr.-Ing., 76327 Pfinztal (DE); Eckl, Wilhelm, 76133 Karlsruhe (DE)

(56) Entgegenhaltungen:
- EP-A- 0 282 451
- WO-A-93/08014
- WO-A-95/04106
- DATABASE WPI Week 199624 Derwent Publications Ltd., London, GB; AN 1996-236121 XP002128622 "Lactate-modified starch with specified flow temp. - having complete biodegradability and thermoplastic properties" & JP 08 092313 A (TOYOBO KK), 9. April 1996 (1996-04-09)

## Beschreibung

Die Erfindung betrifft ein Verfahren zur Herstellung eines thermoplastisch verarbeitbaren Compound-Werkstoffes aus natürlichen Polymeren, indem langkettige natürliche Polymere mit überwiegen duroplastischen Materialeigenschaften durch eine chemische Behandlung mit schwachen Säuren zu kurzkettigen Polymeren mit überwiegend thermoplastischen Materialeigenschaften gespalten werden.

Die Anwendung von Werkstoffen auf der Basis synthetischer Polymere verzeichnet seit deren großindustriellen Produktion in den 50er Jahren einen steten Zuwachs. Die gesamte Weltproduktion an synthetischen Polymeren beläuft sich derzeit auf etwa 100 Mio. Tonnen, wobei die Polyolefine Polyethylen und Polypropylen sowie Polystyrol und Polyvinylchlorid den größten Anteil ausmachen. Diese vier Polymere haben sich deshalb als Massenkunststoffe am Markt etablieren können, weil sie u.a. durch relativ einfache Synthesewege und Reaktionsmechanismen aus petrochemischen Grundstoffen, die aus Mineralöl gewonnen werden, hergestellt werden können. Die sogenannten technischen oder Hochleistungskunststoffe müssen im Gegensatz dazu mitunter mehrere Syntheseschritte durchlaufen, bis sie in ihrer endgültigen chemischen Struktur vorliegen. Ebenso verhält es sich mit Polymeren, die z.B. aus Monomeren der Milchsäure zunächst zu einem Ringsystem dimerisiert und anschließend durch eine Ringöffnungspolymerisation zu einem linearen Polymer polymerisiert werden.

Die genannten Synthesewege sind mit einem erheblichen Kostenaufwand verbunden, weshalb sich technische oder Hochleistungskunststoffe sowie insbesondere biologisch abbaubare Kunststoffe bislang in großen Mengen nicht am Markt durchsetzen konnten. Die Preise für biologisch abbaubare Polymere bewegen sich zum Zeitpunkt der Anmeldung zwischen etwa EUR 2,- und etwa EUR 15,- pro kg, was aus derartigen Polymeren bestehende Produkte nur für spezielle Anwendungen zum Einsatz kommen läßt.

Gegenwärtig wird in großem Umfang versucht, biologisch abbaubare Compounds entweder auf Basis nachwachsender Rohstoffe oder aber auf synthetischer Basis zu formulieren. Hierbei werden synthetische, biologisch abbaubare Werkstoffe mit "BAK" (biologisch abbaubare Kunststoffe) bezeichnet. Diese sind gegenwärtig für einen Preis von ca. EUR 2,- bis EUR 4,- pro kg erhältlich.

Biologisch abbaubare, auf Basis nachwachsender Rohstoffe formulierte Werkstoffe liegen mit ihren Preisen deutlich darüber und reichen bis EUR 15,- pro kg. In dieses Gruppe fällt das Polylactid, gewisse Polyester oder Polyesteramide sowie das Polyhydroxybutyrat bzw. -valerat. Im Falle der Polyhydroxyverbindungen liegt der preisbestimmende Schritt in der langsamen Produktion des Polymers durch Mikroorganismen, was einen hohen Preis von gegenwärtig etwa EUR 7,50 pro kg zu Folge hat.

Die EP 0 282 451 A2 beschreibt ein Verfahren zur Herstellung einer thermoplastischen Polymerschmelze aus dem natürlichen Polymer Stärke, indem die Stärke mit einem kettenspaltenden Katalysator bei erhöhten Temperaturen umgesetzt wird. Als kettenspaltende Katalysatoren, welche die 1,4-glykosidische Bindung der Stärke-Makromoleküle spalten, sind sowohl anorganische und organische Säuren als auch anorganische und organische Basen erwähnt. Während als bevorzugte Basen unter anderem Ammoniak, Natrium-, Kalium-, Calcium- und Magnesiumhydroxid, Tryptophan sowie Mischungen der vorgenannten Komponenten genannt sind, sind als Säuren sowohl starke Säuren, wie Salzsäure, Schwefelsäure, Salpetersäure, Phosphorsäure und dergleichen, als auch schwache Säuren, wie Essigsäure, Propionsäure, n-Butyrsäure, Milchsäure, Glykolsäure, Oxalsäure, Malonsäure, Dinatrium-EDTA, Zitronensäure und dergleichen, erwähnt. Zur Verarbeitung der derart behandelten Stärke sind bekannte thermoplastische Verarbeitungsverfahren, wie Spritzformen, Blasformen, Extrudieren, Koextrudieren, Preßformen oder Vakuumformen vorgesehen. Der thermoplastischen Polymerschmelze können ferner Füllstoffe in großer Auswahl zugesetzt werden.

Der WO 95/04106 A1 sind ebenfalls biologisch abbaubare, natürliche Polymere entnehmbar, welche mit Naturfasern verstärkt sein können. Als natürliches Polymer ist insbesondere thermoplastische Stärke oder eine solche enthaltende Polymermischung genannt, welche zusätzlich zu Stärke ein hydrophobes, biologisch abbaubares Polymer, insbesondere ein Cellulosederivat in Form eines Ethers, Esters oder Mischesters, einen aliphatischen Polyester, ein Protein, einen Polyvinylalkohol oder ein Polycaprolacton, enthält.

Der Erfindung liegt die Aufgabe zugrunde, ein kostengünstiges Verfahren zur Herstellung eines thermoplastisch verarbeitbaren Compound-Werkstoffes, ausgehend von natürlich vorkommenden Polymeren, vorzuschlagen.

Erfindungsgemäß wird diese Aufgabe bei einem Verfahren der eingangs genannten Art dadurch gelöst, daß als langkettiges natürliches Polymer mit überwiegend duroplastischen Materialeigenschaften Chitin verwendet wird, welches durch eine chemische Behandlung mit schwachen Säuren zu kurzkettigeren Polymeren mit überwiegend thermoplastischen Materialeigenschaften gespalten wird. Bevorzugte Ausführungsformen des erfindungsgemäßen Verfahren sind durch die Merkmale der Ansprüche 2 bis 5 gekennzeichnet.

In der Natur gibt es eine Vielzahl von Polymeren, die hauptsächlich in die Gruppen der Polysaccharide, wie Chitin, sowie in die Gruppe der Proteine (z.B. Keratin) eingeordnet werden. Insbesondere Chitin ist jedoch von überwiegend duroplastischem Charakter und folglich nur schlecht bzw. gar nicht thermoplastisch weiterverarbeitbar. Zur Generierung von Chitin muß aber keine aufwendige Synthesearbeit mehr geleistet werden, was den wesentlichen Vorteil gegenüber den synthetischen Polymeren darstellt. Um ein natürliches Polymer auf der Basis von Chitin mittels bekannter Vorrichtungen thermoplastisch verarbeitungsfähig zu machen, muß der umgekehrte Schritt der Degradation des natürlichen Hochpolymers beschritten werden, wobei dieses zu kurzkettigen Polymeren gespalten wird. Dies erfolgt erfindungsgemäß durch eine chemische Behandlung des Chitins mit schwachen Säuren, insbesondere mit schwachen organischen Säuren. Dadurch werden in dem langkettigen Chitin Abbauvorgänge hervorgerufen, was die thermoplastische Verarbeitung des Chitins auf Extrudern, Spritzgießmaschinen oder Heißpressen ermöglicht. Führte man diesen Schritt der chemischen Modifikation nicht durch, so pyrolysierte das Chitin ohne aufzuschmelzen und schädigte folglich die entsprechende Verarbeitungsmaschine.

Bei der Herstellung derartiger Compound-Werkstoffe auf der Basis von Chitin liegt der preisbestimmende Schritt nur noch in dessen Granulierung, die bei synthetischen Polymeren ohnehin als Zwischenschritt durchgeführt wird. Außerdem liegt Chitin als Abfallprodukt aus der Fischereiindustrie vor, was trotz einer notwendigen Vorreinigung des Naturstoffes auf ein günstiges Preisniveau hinführt.

Derart können Compound-Werkstoffe gestaltet werden, welche auf Basis nachwachsender Rohstoffe und somit CO₂-neutral zu günstigen Preisen unter EUR 2,50 pro kg angeboten werden können. Die Compound-Werkstoffe können die unterschiedlichsten Mischungsverhältnisse aufweisen, wobei das Chitin sowohl als Füll- oder Verstärkungsstoff sowie in Abhängigkeit von dessen chemischer Modifizierung als Matrixmaterial verwendet werden kann.

Der erfindungsgemäße Compound-Werkstoff auf der Basis von Chitin kann insbesondere auch mit Pflanzenmehl oder -fasern als Füll- oder Verstärkungsstoffe formuliert werden. Er kann überall dort Anwendung finden, wo aus technischen und/oder ökologischen Gesichtspunkten ein Ersatz von herkömmlichen Kunststoffen sinnvoll erscheint.

## Patentansprüche

1. Verfahren zur Herstellung eines thermoplastisch verarbeitbaren Compound-Werkstoffes aus natürlichen Polymeren, indem langkettige natürliche Polymere mit überwiegend duroplastischen Materialeigenschaften durch eine chemische Behandlung mit schwachen Säuren zu kurzkettigen Polymeren mit überwiegend thermoplastischen Materialeigenschaften gespalten werden, **dadurch gekennzeichnet, daß** als natürliches Polymer Chitin verwendet wird.

2. Verfahren nach Anspruch 1, **dadurch gekennzeichnet, daß** schwache organische Säuren verwendet werden.

3. Verfahren nach Anspruch 1 oder 2, **dadurch gekennzeichnet, daß** das der Säurebehandlung unterzogene, thermoplastische Chitin mittels bekannter thermoplastischer Verarbeitungsverfahren, wie Extrudieren, Spritzgießen oder Heißpressen, zu Naturstoffgranulaten verarbeitet wird.

4. Verfahren nach Anspruch 3, **dadurch gekennzeichnet, daß** den Naturstoffgranulaten Verstärkungsfasern zugesetzt werden.

5. Verfahren nach Anspruch 4, **dadurch gekennzeichnet, daß** natürliche Verstärkungsfasern, wie Pflanzenfasern, zugesetzt werden.

## Claims

1. Process for the production of a thermoplastically workable compound material composed of natural polymers by splitting long-chain natural polymers with predominantly thermosetting material properties through a chemical treatment with weak acids into short-chain polymers with predominantly thermoplastic material properties, **characterised in that** chitin is used as the natural polymer.

2. Process according to Claim 1, **characterised in that** weak organic acids are used.

3. Process according to Claim 1 or 2, **characterised in that** the thermoplastic chitin subjected to the acid treatment is processed into natural granular materials by means of known thermoplastic working processes such as extrusion, injection moulding or hot-pressing.

4. Process according to Claim 3, **characterised in that** reinforcing fibres are added to the natural granular materials.

5. Process according to Claim 4, **characterised in that** natural reinforcing fibres such as plant fibres are added.

## Revendications

1. Procédé de fabrication d'une matière composite permettant un traitement thermoplastique à partir de polymères naturels en décomposant des polymères naturels à chaînes longues ayant principalement des caractéristiques thermodurcissable par un traitement chimique avec des acides faibles pour obtenir des polymères à chaînes courtes ayant principalement des caractéristiques thermoplastiques,
**caractérisé en ce qu'**
on utilise la chitine comme polymère naturel.

2. Procédé selon la revendication 1,
**caractérisé en ce qu'**
on utilise des acides organiques faibles.

3. Procédé selon l'une quelconque des revendications 1 ou 2,
**caractérisé en ce que**
la chitine thermoplastique ayant subi le traitement par de l'acide est travaillée à l'aide de procédés de traitement thermoplastique connus tels que l'extrusion, l'injection ou la compression à chaud pour former des granulés de matière naturelle.

4. Procédé selon la revendication 3,
**caractérisé en ce qu'**
on ajoute des fibres de renforcement aux granulés de matière naturelle.

5. Procédé selon la revendication 4,
**caractérisé en ce qu'**
on ajoute des fibres de renforcement naturelles telles que des fibres de plantes.
